# EUROPEAN PATENT SPECIFICATION

(11) **EP 1 977 652 B1**
(45) Date of publication and mention of the grant of the patent: **04.03.2015**
(21) Application number: 07251302.1
(22) Date of filing: 27.03.2007
(51) Int. Cl.: A23G 3/00, A23G 3/42, A23G 3/34

(54) **Confectionary composition**
Konfektzusammensetzung
Composition de confiserie

(43) Date of publication of application: 08.10.2008
(73) Proprietor: Oxford PharmaScience Limited, Camden London NW1 0NH (GB)
(72) Inventor: Bravo Cordero, Marcelo Leonardo, London NW1 ONH (GB)
(74) Representative: Salmon, Victoria Beatrice

(56) References cited:
- EP-A- 1 151 673
- WO-A-99/26491
- DATABASE FSTA / IFIS [Online] INTERNATIONAL FOOD INFORMATION SERVICE (IFIS), FRANkFURT-MAIN, DE; 2002, IZZO M T: "Inulin and oligofructose in functional confections." XP002438949 Database accession no. 2002-00-g0718 FSTA & IZZO M T: "Inulin and oligofructose in functional confections" MANUFACTURING CONFECTIONER, vol. 82, no. 8, 2002, pages 79-80, 82 (8) 79-90 2002 ORAFTI ACTIVE FOOD INGREDIENTS, AANDORENSTRAT 1, 3300 TIENEN, BELGIUM

## Description

This invention relates to confectionery compositions. More particularly, but not exclusively, the invention relates to improved chewy confectionery products such as caramels and toffees. Embodiments of the invention relate to chewy confectionery fortified with nutritionally enhancing ingredients such as calcium, glucosamine or other minerals and vitamins, chewy confectionery that imparts functional benefits such as digestive health or heart health, and healthier (lower sugar, high in fibre) chewy confectionery. Embodiments also relate to processes for making confectionery compositions.

It is known to deliver functional ingredients through non chewy confectionery products. EP 1,151,673 discloses a product having a casing and filling. The functional ingredient can be incorporated into either the casing or the filling. This patent is concerned with creating a sensory effect in the mouth as the confectionery dissolves, without chewing or biting.

Chewy confectioneries are popular food items. The most familiar varieties are caramels, kisses, jelly candies, taffy and toffee. Chewy confectioneries are often used to deliver supplements and dietary fortification. For example, in "Inulin and Oligofructose in Functional Confections", by Izzo MT, (the Manufacturing Confectioner, vol 82, no 8, page 79 to 90 (2002) a soft fruit chew is exemplified with a low level of calcium (1.34%) as a fortifying component. This product has a high proportion (more than 75%) of mono and disaccharides, comprised of sucrose, corn syrup and icing sugar, and a small amount (8%) of inulin.

One of the problems associated with producing chewy confectioneries is the need to achieve the appropriate relatively soft texture. Prior art processes do this by inhibiting sugar crystallisation. This can be achieved by agitation, using appropriate temperatures, cooling rates as well as ingredients. Traditionally, this is primarily achieved by balancing the use of crystallising sugars (sucrose) with reducing sugars (e.g. glucose syrup).

One problem encountered in using confectionery as a base for mineral fortification is that the resulting product can be gritty and chalky and the minerals themselves may induce crystallisation of the sugars resulting in a grainy shorter (crumbly) texture. Also, even though the end product may be tasty and appealing, it will be high in sugar, starch carbohydrates, and in fat and generally not ideal as a form to deliver health benefits.

One example of this is disclosed in WO 99/26491. This fortified confectionery system aims to deliver between 0.2 wt% and 45 wt% of fortifying component while maintaining a smooth and soft texture. The chewy confectionery product comprises 3 wt % to 18 wt% fat, 40 wt % to 70 wt % of carbohydrate. The carbohydrate system is more than 50% mono and disaccharide. In order to ensure that the confectionery is neither too hard and grainy in texture, nor too sticky and runny, the ratio of reducing to non-reducing sugars is kept between 1:0.2 and 1:1.

Carbohydrates are classed into two groups: simple and complex carbohydrates. Simple carbohydrates such as glucose and fructose are monosaccharides, which cannot be hydrolysed into smaller units. A disaccharide is a carbohydrate composed of two monosaccharides. Complex carbohydrates comprise many monosaccharides linked together. In this specification, the terms oligosaccharides and polysaccharides are used together to mean carbohydrates comprising three or more monosaccharides linked together.

According to one aspect of this invention, there is provided a confectionery composition comprising from 40wt% to 75wt% of a carbohydrate system and from 0.2wt% to 45wt% of a fortifying component, the carbohydrate system comprising from 5wt% to 100wt% of a non-digestible soluble oligosaccharide, a non-digestible soluble polysaccharide or a combination thereof and from 0wt% to 50wt% of the monosaccharide, the disaccharide, or the combination thereof and in which the ratio of reducing to non-reducing sugars is between 1:1.1 and 1:20.

In this specification, the term "non-digestible" is used to mean a substance which by virtue of its chemical structure is able to pass through the mouth and stomach substantially without change and is resistant to digestion by salivary and intestinal enzymes.

The confectionery composition may comprise preferably from 50wt% to 65wt% of the carbohydrate system and more preferably from 55wt% to 60wt% of the carbohydrate system.

The carbohydrate system may comprise preferably from 20wt% to 60wt%, more preferably from 30wt% to 50wt% of non-digestible soluble oligosaccharide, non-digestible soluble polysaccharide, or combination thereof. Thus the non-digestible soluble oligosaccharide and/or non-digestible soluble polysaccharide may replace partially or near totally the sugars, starches and digestible carbohydrates typically used in chewy confectionery.

The non-digestible soluble oligosaccharides and/or polysaccharides may be selected from the group consisting of inulins, levans, gramanins, fructo-oligosaccharides, galacto-oligosaccharides, xylo-oligosaccharides, beta-glucans and polydextrose.

The non-digestible oligosaccharides may comprise a fructo-oligosaccharide syrup. The fructo-oligosaccharide syrup may comprise 75wt% dry matter. The fructo-oligosaccharides may have an average degree of polymerisation (dp) of between 3 and 8, preferably between 3 and 5.

The confectionery composition may comprise preferably, from 10wt% to 30wt% of the fortifying component, and more preferably from 15wt% to 25wt% of the fortifying component.

The fortifying component may be selected from various minerals, mineral sources, vitamins, vitamin sources and combinations thereof. The fortifying component may include other functional ingredients, such as stanol esters. The fortifying component preferably includes or provides calcium, magnesium, glucosamine and/or chondroitin. The minerals may be in the form of mineral salts. The calcium and magnesium salts are preferably in the form of calcium carbonate and magnesium carbonate. Preferably, the mineral salts are in a micronised or ultra fine form. The particle size may be in a region of 2 to 10 microns.

The confectionery composition may comprise further ingredients to obtain a desired confectionery base. The further ingredients may be selected from one or more of fats, proteins, gelatines, sugar alcohols, complex carbohydrates, flavourings. The fats may be those appropriate for making confectionery products, eg vegetable fats/oils, cocoa butter, milk fat, butter, but may also include functional oils or fats such as omega-3.

In one embodiment, the composition may comprise from 15wt% to 25wt% of a short chain non-digestible soluble oligosaccharide, which may be a fructo-oligosaccharide. The degree of polymerisation of the fructo-oligosaccharide may be between 3 and 8.

The carbohydrate system may include other carbohydrates such that the composition has a total amount of carbohydrates in the range of from 50wt% to 60wt%.

In another embodiment, the fortifying component may comprise from 15wt% to 25wt%, and may be a blend of mineral salts and vitamins. The carbohydrate system may comprise from 45wt% to 55wt% of a blend of a short chain fructo-oligosaccharide and a long chain inulin.

The short chain fructo-oligosaccharide and the long chain inulin may have a degree of polymerisation (dp) of up to 50 to 60 with an average dp of 20. The composition may have a total amount of carbohydrates in the range of 45wt% to 55wt%. The composition may have a ratio of reducing to non-reducing sugars to 1:1.4, and may comprise further ingredients, such as fats, proteins, gelatines, sweeteners and other ingredients.

The carbohydrate system may comprise from about 10wt% to about 100wt%, preferably from about 25wt% to about 100wt%, more preferably from about 50wt% to about 100wt% of an oligosaccharide, a polysaccharide, or the combination thereof.

In one embodiment, the non-digestible oligosaccharide/polysaccharide may comprise the aforesaid fructo-oligosaccharide syrup and an inulin. The ratio of fructo-oligosaccharide to inulin may be in the range of 25: 75 to 75: 25. The inulin may be in powder or syrup form and may have an average dp of between 20 and 60. The average dp of the inulin may be substantially 20. Alternatively, the average dp of the inulin may be between 50 and 60.

In one embodiment, the non-digestible oligosaccharide may comprise beta-glucan.

The confectionery composition may comprise reducing sugars, non-reducing sugars or a combination of reducing and non-reducing sugars but it has been discovered that by using non-digestible soluble oligo and/or poly saccharides, reducing sugars can be significantly reduced and still achieve the desired product characteristics of a relatively soft chewy texture.

The non-digestible oligosaccharide may be a linear or branched polymer. The non-digestible oligosaccharide may include a molecule of d-glucose in a terminal position on the molecules of the oligosaccharide. The non-digestible oligosaccharide may include a plurality of molecules of a monosaccharide, which may be joined by glycosidic links.

The mono-saccharides may comprise one or more of fructose, galactose and/or xylose. The disaccharides may comprise one or more of sucrose, maltose, lactose.

By blending appropriate combinations of non-digestible oligosaccharides and non-digestible polysaccharides and by appropriate selection of suitable parameters, such as different mono-saccharides, by varying the dp or by providing the oligosaccharides in solid or syrup form, desired results can be achieved to provide different finished product characteristics.

The term degree of polymerisation (dp) as used herein refers to the number of monosaccharide units in each oligomer or polymer. In embodiments of this invention, dp may vary between 3 and 60.

According to another aspect of this invention, there is provided a process for preparing a confectionery composition comprising cooking a composition as set out above.

The carbohydrate system may be mixed with a fortifying component. The fortifying component may be blended with the carbohydrate system prior to cooking.

The process may comprise mixing the carbohydrate system with at least one other ingredient to form a carbohydrate system mixture. Preferably, the process comprises mixing the carbohydrate system with one or both of a fat and a protein to form the carbohydrate system mixture.

The carbohydrate system mixture may be heated to dissolve sugars therein, and form a mass. Further ingredients may be added to the mass. The carbohydrate system mixture may be heated to a temperature in the range of 105°C to 135°C, preferably 110°C to 118°C.

Preferably, the agitation is controlled to achieve desired levels of sugar crystals in the mass.

The process may be a continuous process or a batch process.

The batch process may comprise forming the carbohydrate system mixture in a vessel and thereafter heating the carbohydrate system mixture to form the mass. After the step of heating, other ingredients such as salt, butter may be added to the vessel.

The mass may then be transferred to a cooling means, preferably a cooling surface, which may be a surface of a cooling table or wheel. The cooled mass may then be passed through cutting apparatus to form a plurality of pieces. The pieces may be wrapped.

In the continuous process the carbohydrate system mixture may be passed through evaporator means, which may comprise a scraped surface evaporator and may then be arranged in treating means such as carameliser kettles.

The composition of the process may include any of the features described in relation to the composition above.

Embodiments of the invention will now be described by way of example only.

Table 1 shows the parameters of compositions according to the invention, save that where the wt% of non-digestible soluble oligosaccharide, and/or non-digestible soluble polysaccharide in the carbohydrate system is below 5wt%, then these are not compositions in accordance with the invention.

The invention provides a soft chewable confectionery which contains up to 45% by weight of a fortifying component. The fortifying component may comprise a mineral source, a vitamin source, a nutrient or functional ingredient or a mixture thereof.

It has been found that a relatively soft, chewable texture is achieved by incorporating non-digestible soluble oligosaccharides and polysaccharides.

| **Table 1 : Composition parameters** | |
|---|---|
| **Ingredient** | **wt%** |
| Carbohydrate system | 40-75 |
| Sucrose | 0-30 |
| Glucose | 0-31 |
| Non-digestible soluble oligosaccharides/polysaccharides | 2-75 |
| Fat | 3-18 |
| Protein | 0-10 |
| Fortifying component | 0.2-45 |
| Flavours, colour, misc additives | up to 10 |
| | |
| Reducing: non reducing sugar ratio | 1:1.1-1:20 |

Non-digestible soluble oligosaccharides and polysaccharides are complex carbohydrates of the non-a-glucan as well as the mixed linkage beta-D glucan type.

The oligosaccharides and polysaccharides of the non-a-glucan type have osidic bonds, which resist hydrolysis by salivary and intestinal digestive enzymes. In the colon, they are digested by anaerobic bacteria providing various nutritional benefits such as difidogenesis (pre-biotic) affecting the colon pH. They also bind calcium and magnesium irons in the small intestine which may have a positive effect in the absorption and on stool bulking.

Beta-D-glucans, usually referred to as beta-glucans, comprise a class of non-digestible polysaccharides widely found in nature in such sources as oats, barley, yeast, bacteria, algae and mushrooms. It has been shown in numerous animal and clinical studies, that ingesting soluble beta-glucan causes a reduction in blood total and low-density lipoprotein cholesterol content, which in turn reduces the risk of coronary heart disease. Simultaneously, beta-glucans also retard and weaken the absorption of glucose in the small intestine, which leads to a diminished secretion of insulin. Consequently, synthesis of cholesterol, which is promoted by insulin, is weakened.

The non-digestible soluble oligosaccharides and polysaccharides include inulins, levans, gramanins, fructo-oligosaccharides, galacto-oligosaccharides, xylo-oligosaccharides, polydextrose and beta-glucans.

The non-digestible soluble oligosaccharides and polysaccharides used in this invention can be linear or branched oligomers and/or polymers. The molecules of the oligosaccharides and/or polysaccharides may or may not include molecules of d-glucose in the terminal position. The oligosaccharides and/or polysaccharides may also include several molecules of a monosaccharide e.g. fructose, galactose, xylose which may be joined via a glycosidic link.

It has been found that by selecting appropriate non-digestible soluble oligosaccharides and/or polysaccharides as described, the confectionery composition can be provided with similar properties to conventional compositions including sucrose or other starch oligosaccharides. The non-digestible soluble oligosaccharides and/or polysaccharides can be incorporated into the process of manufacturing the confectionery composition, and compositions according to the invention have the advantage of including less free sugars such as sucrose than conventional confectionery compositions

It is an advantage of the present invention that the confectionery compositions produced have a very low or a nil level of glucose syrup. This suggests that non-digestible soluble oligosaccharides and/or polysaccharides can be excellent inhibitors of sugar crystallisation. The inventors have also discovered that by pre-blending the fortifying minerals with the non-digestible oligosaccharides, the texture of properties of the confectionery can be further improved. This improvement can be accentuated by using a shorter chain of oligosaccharides as this leverages their humectant and fat like properties.

In order to prepare a confectionery composition, the following process is carried out.

A fortifying component in the form of a mineral blend is made by blending calcium carbonate and milk minerals extract. The fortifying component is then blended with carbohydrates, fats and proteins (and added water if necessary) in an agitated kettle to form a slurry or pre blend. The step of pre blending the fortifying component and the carbohydrates of the present invention before heating has been found to permit the achievement of the soft chewy texture. The slurry is heated until sugars are dissolved to form a cooked mass to which minor ingredients and additives can be added before cooling and forming into finished pieces. The type and extent of agitation are carefully controlled to achieve desired levels of sugar crystals in the cooked mass. The process may be batch or continuous.

In the batch process, carbohydrate, fats and protein are mixed and then heated to temperatures ranging from about 105 to about 135°C, preferably about 110°C to 118°C after which salt, butter, and other additives may be added. The mass is then transferred to a cooling table or wheel and run through a cut & wrap machine.

In the continuous process, the carbohydrate-fat-protein mixture is passed through scraped surface evaporators and then transferred to carameliser kettles and cooked to about 105 to 135°C, preferably 110°C to 118°C and then deposited as individual pieces before wrapping.

Table 2 shows specific examples of compositions according to the invention. These examples are exemplary only.

### Example 1a

### Bone health chew with oligofructose.

This is a bone health chew including calcium, milk minerals, Vitamins D & K to promote bone health in a soft, tasty, lower sugar confectionery base.

A fortifying component in the form of a mineral blend is made by blending equal parts of calcium carbonate and commercially available milk minerals extract.

190 g of sucrose are preblended with 200g of the fortifying component in the form of the mineral blend, and then dispersed into a blend of 300g of a commercially sourced oligofructose syrup (75% solids) and 210g of a regular 42DE glucose syrup (circa 80% solids) using a Hobart mixer. (The terms oligofructose and fructo oligosaccharide are equivalents in this specification). The blend is stirred until all lumps are dispersed. The blend is then placed in a cooking kettle where 30 g of skimmed milk powder and 100g of preheated palm oil are added under medium agitation. The kettle is heated to 118° C to produce a caramel. Flavour and salt are added. Vitamin D is added. The product is poured onto a cooling table to form a slab and left at room temperature to cool and thereafter cut into pieces and wrapped.

| **Table 2: Examples of compositions** | | | | | | | | |
|---|---|---|---|---|---|---|---|---|
| **Ingredients** | | 1a | 1b | 1c | 1d | 2 | 2a | 3 |
| Carbohydrate system (dry basis), g | | 598 | 632 | 768 | 586 | 590 | 429 | 680 |
| sucrose, g | | 190 | 190 | 180 | 270 | 0 | 0 | 190 |
| glucose syrup, g | | 210 | 210 | 300 | 0 | 0 | 0 | 210 |
| fructose, g | | 0 | 0 | 0 | 0 | 35 | 0 | 0 |
| oliqofructose syrup (s), g | | 300 | 150 | 250 | 400 | 335 | 100 | 150 |
| inulin powder g | | 0 | 150 | 0 | 50 | 0 | 0 | 0 |
| beta glucan source (22%), g | | | | | | | | 200 |
| polydextrose, g | | | | | | 300 | 350 | 0 |
| Fat, g | | 100 | 100 | 100 | 100 | 100 | 100 | 50 |
| Skimmed milk powder, g | | 30 | 30 | 20 | 30 | 30 | 30 | 30 |
| Fortifying component, g | | 200 | 200 | 200 | 200 | 260 | 200 | 25 |
| Sugar alcohol, g | | | | | | 200 | 200 | 0 |
| Flavours, colour, misc additives, g | | 5 | 5 | 5 | 5 | 5 | 5 | 5 |
| | | | | | | | | |
| % Mono 8 disaccharides | | 49% | 46% | 49% | 49% | 5% | 3% | 47% |
| % Oligo & polysaccharides | | 51% | 54% | 51% | 51% | 70% | 42% | 63% |
| Reducing:non reducing sugar ratio | | 1:1.7 | 1:1.6 | 1:1.2 | 1:8.3 | 1:1.2 | 1:1.6 | 1:2.2 |

### Example 1b

### Enhanced calcium absorption bone health chew (oligofructose and inulin).

This example is similar to example 1a, but by using a blend of oligofructose and inulin of appropriate chain lengths the absorption of the calcium can be enhanced.

A fortifying component in the form of a mineral blend is made by blending equal parts of calcium carbonate and a commercially available milk minerals extract.

150 g of powder inulin are preblended with 200g of the fortifying component and dispersed into a blend of 150g of a commercially sourced oligofructose syrup (75% solids) and 210g of a regular 42DE glucose syrup (circa 80% solids) using a Hobart mixer. Alternatively, a preblend of inulin and oligofructose can be used. The blend is stirred until all lumps are dispersed. The blend is then placed in a cooking kettle and 190g of sugar, 30 g of skimmed milk powder and 100g of preheated palm oil are added under medium agitation. The kettle is heated to 115° C to produce a caramel. Flavour and salt are added. Vitamin D and other ingredients may be added. The product is poured onto a cooling table to form a slab and left at room temperature to cool and thereafter cut into pieces and wrapped.

### Example 1c

### Prebiotic bone health chew (oligofructose)

This is made in a similar way to the processes described for examples 1 a and 1b but uses a higher level of oligofructose delivering also a prebiotic benefit.

### Example 1d

### Fortified confectionery free of corn syrup

Some nutritionists advocate the reduction or elimination of corn syrups, particularly high fructose corn syrups, from the diet. This formulation achieves a relatively soft chewy texture without the use of corn syrup.

A fortifying component in the form of a mineral blend is made by blending equal parts of calcium carbonate and a milk minerals extract.

50 g of powder inulin are preblended with 200 g of the fortifying component and 270 g of sugar and dispersed into 400g of a oligofructose syrup (75% solids) using a Hobart mixer. The blend is stirred until all lumps are dispersed. The blend is then placed in a cooking kettle and 30g of skimmed milk powder and 100g of preheated palm oil are added under medium agitation. The kettle is heated to 117° C to produce a caramel. Flavour and salt are added. Vitamins and other ingredients may be added. The product is poured onto a cooling table to form a slab and left at room temperature to cool and thereafter cut into pieces and wrapped.

### Example 2

### Low sugar/prebiotic fortified confectionery

This formula achieves a low sugar content (<5%) and delivers prebiotic and bone health benefits and is ideal as a vehicle for delivery of fortification to children.

A fortifying component in the form of a mineral blend is made by blending equal parts of calcium carbonate and a commercially available milk minerals extract.

300 g of polydextrose are preblended with 260 g of the fortifying component and dispersed into 335g of a commercially sourced oligofructose syrup (75% solids) using a Hobart mixer. The blend is stirred until all lumps are dispersed. The blend is then placed in a cooking kettle where 30 g of skimmed milk powder and 100g of preheated fractionated palm oil are added under medium agitation. The kettle is heated to 115° C to produce a caramel. Flavour and salt are added. Vitamins and other ingredients may be added. The product is poured onto a cooling table to form a slab and left at room temperature to cool and thereafter cut into pieces and wrapped.

### Example 2b

### Sugar free fortified confectionery

This is made in a similar manner to that described in Example 2a. There is no sugar added to the formula, only residual sugar from hydrolysis of oligofructose and polydextrose. The product is sweetened with an artificial sweetener.

A fortifying component in the form of a mineral blend is made by blending equal parts of calcium carbonate and a commercially available milk minerals extract.

350g of polydextrose is preblended with 200 g of the fortifying component and dispersed into 100g of a commercially sourced oligofructose syrup (75% solids using a Hobart mixer and adding water as necessary. The blend is stirred until all lumps are dispersed. The blend is then placed in a cooking kettle where 30 g of skimmed milk powder and 100g of preheated fractionated palm oil are added under medium agitation. The kettle is heated to 115° C to produce a caramel. Flavour and salt are added. Sucralose (artificial sweetener) is added. Vitamins and other ingredients may be added. The product is poured onto a cooling table to form a slab and left at room temperature to cool and thereafter cut into pieces and wrapped.

### Example 3

### Fortified confectionery for heart health

This composition delivers at least 0.75g of beta glucan in a serving of two daily units. The beta glucan could be derived from barley, and could be provided in the form of a beta glucan source, for example, processed barley comprising of amilopectin starch and 22% (1-3)(1-4) mixed linkage beta D-glucan.

190 g of sugar are blended with 200g of a concentrated source of beta glucan (22%) and dispersed into a blend of 150g of a oligofructose syrup (75% solids) and 210g of a regular 42DE glucose syrup (circa 80% solids) using a Hobart mixer. The blend is stirred until all lumps are dispersed. The blend is then placed in a cooking kettle where 30g of skimmed milk powder and 50g of preheated fractionated palm oil are added under medium agitation. The kettle is heated to 115° C to produce a caramel. Flavour and salt are added. A mineral & vitamin blend is added. The product is poured onto a cooling table to form a slab and left at room temperature to cool and thereafter cut into pieces and wrapped.
An alternative to this composition can be formulated using a more concentrated source of beta-gluca, e.g. 75%, in which case the level of the beta glucan source can be reduced and balanced with other components of the carbohydrate system. This composition could also be varied to deliver also prebiotic benefits, eliminate or reduce sugars, etc as demonstrated in the previous examples as well as include other cholesterol reducing ingredients such as stanol esters.

Various modifications can be made without departing from the scope of the appended claims, for example, the amounts of different carbohydrates can vary. The fortifying component used in these examples could be varied to deliver any specific nutrient profile as desired. The fortifying component could include any suitable minerals and vitamins, and could include herbal extracts, stanol esters, and other functional ingredients.

In the preferred embodiments of this invention, optimal results are achieved by pre-slurrying and or pre-blending the mineral fortifying component with the non-digestible oligosaccharides and/or other carbohydrates in the system prior to cooking either in a continuous or a batch process. Vitamins are best added after cooking to minimise degradation.

## Claims

1. A confectionery composition, the composition comprising from 40wt% to 75wt% of a carbohydrate system and from 0.2wt% to 45wt% of a fortifying component, the carbohydrate system comprising a non-digestible soluble oligosaccharide, a non-digestible soluble polysaccharide or a combination thereof, **characterised in that** that the ratio of reducing to non-reducing sugars is between 1:1.1 and 1:20 and the carbohydrate system comprises from 5wt% to 100wt% of non-digestible soluble oligosaccharide, non-digestible soluble polysaccharide, or combination thereof and from 0wt% to 50wt% of a monosaccharide, a disaccharide, or a combination thereof.

2. A composition according to claim 1, in which the confectionery composition comprises from 50wt% to 65wt% of the carbohydrate system.

3. A composition according to claim 2, in which the confectionery composition comprises from 55wt% to 60wt% of the carbohydrate system.

4. A composition according to any of the preceding claims, in which the carbohydrate system comprises from 20wt% to 60wt% of non-digestible soluble oligosaccharide, non-digestible soluble polysaccharide, or combination thereof.

5. A composition according to claim 4, in which the carbohydrate system comprises from 30wt% to 50wt% of non-digestible soluble oligosaccharide, non-digestible soluble polysaccharide, or combination thereof.

6. A composition according to any of the preceding claims, in which the non-digestible soluble oligosaccharides and/or polysaccharides are selected from the group consisting of inulins, levans, gramanins, fructo-oligosaccharides, galacto-oligosaccharides, xylo-oligosaccharides, beta-glucans and polydextrose.

7. A composition according to claim 6, in which the non-digestible oligosaccharides comprise a fructo-oligosaccharide syrup.

8. A composition according to claim 7, in which the fructo-oligosaccharide syrup comprises 75wt% dry matter.

9. A composition according to any of claims 6 to 8, in which the fructo-oligosaccharides have an average degree of polymerisation (dp) of between 3 and 8.

10. A composition according to claim 9, in which the fructo-oligosaccharides have an average degree of polymerisation (dp) of between 3 and 5.

11. A composition according to any of the preceding claims, in which the confectionery composition comprises from 10wt% to 30wt% of the fortifying component.

12. A composition according to claim 11, in which the confectionery composition comprises from 15wt% to 25wt% of the fortifying component.

13. A composition according to any of the preceding claims, in which the fortifying component is selected from various minerals, mineral sources, vitamins, vitamin sources and combinations thereof.

14. A composition according to claim 13, in which the fortifying component includes or provides calcium, magnesium, glucosamine and/or chondroitin.

15. A composition according to claims 13 or 14, in which the minerals are in the form of mineral salts.

16. A composition according to claim 15 when dependent on claim 14, in which calcium and magnesium salts are in the form of calcium carbonate and magnesium carbonate.

17. A composition according to claims 15 or 16, in which the mineral salts are in a micronised or ultra fine form.

18. A composition according to claim 17, in which the particle size is in a region of 2 to 10 microns.

19. A process for preparing a confectionery **characterised in that** the process comprises cooking a composition according to any of claims 1 to 18.

20. A process according to claim 19, in which the carbohydrate system is mixed with the fortifying component.

21. A process according to claims 19 or 20, in which the fortifying component is blended with the carbohydrate system prior to cooking.

## Patentansprüche

1. Eine Konfektzusammensetzung, wobei die Zusammensetzung 40 Gew% bis 75 Gew% eines Kohlenhydratsystems und 0,2 Gew% bis 45 Gew% einer anreichernden Komponente umfasst, wobei das Kohlenhydratsystem einen nicht verdaubaren, lösbaren Oligosaccharid, einen nicht verdaubaren, lösbaren Polysaccharid oder eine Kombination daraus umfasst, **dadurch gekennzeichnet, dass** das Verhältnis von reduzierenden zu nicht reduzierenden Zuckern zwischen 1:1,1 und 1:20 liegt und das Kohlenhydratsystem 5 Gew% bis 100 Gew% von nicht verdaubarem, lösbarem Oligosaccharid, nicht verdaubarem, lösbarem Polysaccharid oder einer Kombination daraus und 0 Gew% bis 50 Gew% eines Monosaccharids, eines Disaccharids, oder einer Kombination daraus umfasst.

2. Eine Zusammensetzung gemäß Anspruch 1, in welcher die Konfektzusammensetzung 50 Gew% bis 65 Gew% des Kohlenhydratsystems umfasst.

3. Eine Zusammensetzung gemäß Anspruch 2, in welcher die Konfektzusammensetzung 55 Gew% bis 60 Gew% des Kohlenhydratsystems umfasst.

4. Eine Zusammensetzung gemäß einem der vorhergehenden Ansprüche, in welcher das Kohlenhydratsystem 20 Gew% bis 60 Gew% eines nicht verdaubaren, lösbaren Oligosaccharids, eines nicht verdaubaren, lösbaren Polysaccharids, oder einer Kombination daraus umfasst.

5. Eine Zusammensetzung gemäß Anspruch 4, in welcher das Kohlenhydratsystem 30 Gew% bis 50 Gew% eines nicht verdaubaren, lösbaren Oligosaccharids, eines nicht verdaubaren, lösbaren Polysaccharids oder einer Kombination daraus umfasst.

6. Eine Zusammensetzung gemäß einer der vorhergehenden Ansprüche, in welcher die nicht verdaubaren, lösbaren Oligosaccharide und/oder Polysaccharide aus der Gruppe ausgewählt sind, welche aus Inulinen, Levanen, Gramaninen, Fructo-Oligosacchariden, Galacto-Oligosacchariden, Xylo-Oligosacchariden, Beta-Glucanen und Polydextrose besteht.

7. Eine Zusammensetzung gemäß Anspruch 6, in welcher die nicht verdaubaren Oligosaccharide einen Fructo-Oligosaccharidsirup umfassen.

8. Eine Zusammensetzung gemäß Anspruch 7, in welcher der Fructo-Oligosaccharidsirup 75 Gew% Trockensubstanz umfasst.

9. Eine Zusammensetzung gemäß einem der Ansprüche 6 bis 8, in welcher die Fructo-Oligosaccharide einen durchschnittlichen Polymerisationsgrad (dp) von 3 bis 8 aufweisen.

10. Eine Zusammensetzung gemäß Anspruch 9, in welcher die Fructo-Oligosaccharide einen durchschnittlichen Polymerisationsgrad (dp) von 3 bis 5 aufweisen.

11. Eine Zusammensetzung gemäß einem der vorhergehenden Ansprüche, in welcher die Konfektzusammensetzung 10 Gew% bis 30 Gew% der anreichernden Komponente umfasst.

12. Eine Zusammensetzung gemäß Anspruch 11, in welcher die Konfektzusammensetzung 15 Gew% bis 25 Gew% der anreichernden Komponente umfasst.

13. Eine Zusammensetzung gemäß einem der vorhergehenden Ansprüche, in welcher die anreichernde Komponente aus verschiedenen Mineralien, Mineralquellen, Vitaminen, Vitaminquellen und Kombinationen daraus ausgewählt ist.

14. Eine Zusammensetzung gemäß Anspruch 13, in welcher die anreichernde Komponente Kalzium, Magnesium, Glucosamin und/oder Chondroitin beinhaltet oder bereitstellt.

15. Eine Zusammensetzung gemäß Anspruch 13 oder 14, in welcher die Mineralien in der Form von Mineralsalzen sind.

16. Eine Zusammensetzung gemäß Anspruch 15, wenn dieser von Anspruch 14 abhängt, in welcher Kalzium- und Magnesiumsalze in der Form von Kalziumcarbonat und Magnesiumcarbonat sind.

17. Eine Zusammensetzung gemäß Anspruch 15 oder 16, in welcher die Mineralsalze in einer mikronisierten oder ultrafeinen Form sind.

18. Eine Zusammensetzung gemäß Anspruch 17, in welcher die Partikelgröße in einem Bereich von 2 bis 10 Mikron ist.

19. Ein Verfahren zum Vorbereiten einer Konfektzusammensetzung, **dadurch gekennzeichnet dass** das Verfahren ein Kochen einer Zusammensetzung gemäß einer der Ansprüche 1 bis 18 umfasst.

20. Ein Verfahren gemäß Anspruch 19, in welchem das Kohlenhydratsystem mit der anreichernden Komponente vermischt ist.

21. Ein Verfahren gemäß Anspruch 19 oder 20, in welchem die anreichernde Komponente vor dem Kochen mit dem Kohlenhydratsystem vermengt wird.

## Revendications

1. Composition de confiserie, la composition comprenant de 40 % en poids à 75 % en poids d'un système glucidique et de 0,2 % en poids à 45 % en poids d'un composant fortifiant, le système glucidique comprenant un oligosaccharide soluble non digestible, un polysaccharide soluble non digestible ou une combinaison de ceux-ci, **caractérisée en ce que** le rapport des sucres réducteurs aux sucres non réducteurs est entre 1:1,1 et 1:20 et le système glucidique comprend de 5 % en poids à 100 % en poids d'oligosaccharide soluble non digestible, de polysaccharide soluble non digestible, ou d'une combinaison de ceux-ci et de 0 % en poids à 50 % en poids d'un monosaccharide, d'un disaccharide, ou d'une combinaison de ceux-ci.

2. Composition selon la revendication 1, où la composition de confiserie comprend de 50 % en poids à 65 % en poids du système glucidique.

3. Composition selon la revendication 2, où la composition de confiserie comprend de 55 % en poids à 60 % en poids du système glucidique.

4. Composition selon l'une quelconque des revendications précédentes, où le système glucidique comprend de 20 % en poids à 60 % en poids d'oligosaccharide soluble non digestible, de polysaccharide soluble non digestible ou d'une combinaison de ceux-ci.

5. Composition selon la revendication 4, où le système glucidique comprend de 30 % en poids à 50 % en poids d'oligosaccharide soluble non digestible, de polysaccharide soluble non digestible ou d'une combinaison de ceux-ci.

6. Composition selon l'une quelconque des revendications précédentes, où les oligosaccharides solubles non digestibles et/ou les polysaccharides solubles non digestibles sont choisis dans le groupe consistant en les inulines, les lévanes, les gramanines, les fructo-oligosaccharides, les galacto-oligosaccharides, les xylo-oligosaccharides, les bêta-glucanes et le polydextrose.

7. Composition selon la revendication 6, où les oligosaccharides non digestibles comprennent un sirop de fructo-oligosaccharides.

8. Composition selon la revendication 7, où le sirop de fructo-oligosaccharides comprend 75 % en poids de matière sèche.

9. Composition selon l'une quelconque des revendications 6 à 8, où les fructo-oligosaccharides ont un degré moyen de polymérisation (dp) entre 3 et 8.

10. Composition selon la revendication 9, où les fructo-oligosaccharides ont un degré moyen de polymérisation (dp) entre 3 et 5.

11. Composition selon l'une quelconque des revendications précédentes, où la composition de confiserie comprend de 10 % en poids à 30 % en poids du composant fortifiant.

12. Composition selon la revendication 11, où la composition de confiserie comprend de 15 % en poids à 25 % en poids du composant fortifiant.

13. Composition selon l'une quelconque des revendications précédentes, où le composant fortifiant est choisi parmi différents minéraux, sources de minéraux, vitamines, sources de vitamines et leurs combinaisons.

14. Composition selon la revendication 13, où le composant fortifiant inclut ou fournit du calcium, du magnésium, de la glucosamine et/ou de la chondroïtine.

15. Composition selon la revendication 13 ou 14, où les minéraux sont sous forme de sels minéraux.

16. Composition selon la revendication 15 quand elle dépend de la revendication 14, où les sels de calcium et de magnésium sont sous forme de carbonate de calcium et de carbonate de magnésium.

17. Composition selon la revendication 15 ou 16, où les sels minéraux sont sous une forme micronisée ou ultrafine.

18. Composition selon la revendication 17, où la taille de particule est dans une région de 2 à 10 pm.

19. Procédé pour préparer une confiserie **caractérisé en ce que** le procédé comprend la cuisson d'une composition selon l'une quelconque des revendications 1 à 18.

20. Procédé selon la revendication 19, où le système glucidique est mélangé avec le composant fortifiant.

21. Procédé selon la revendication 19 ou 20, où le composant fortifiant est mélangé avec le système glucidique avant la cuisson.
